# EUROPEAN PATENT SPECIFICATION

(11) **EP 3 211 224 B1**
(45) Date of publication and mention of the grant of the patent: **02.12.2020**
(21) Application number: 15852882.8
(22) Date of filing: 23.07.2015
(51) Int. Cl.: F03D 7/04, F03D 1/06, F03D 1/04

(54) **SINGLE-FRAME TYPE IMPELLER OF WIND TURBINE**
EINZELRAHMEN-FLÜGELRAD FÜR EINE WINDTURBINE
HÉLICES DU TYPE À BÂTI UNIQUE DE TURBINE ÉOLIENNE

(30) Priority: 21.10.2014 CN 201410561011
(43) Date of publication of application: 30.08.2017
(73) Proprietor: Zhang, Xiaoxin, Zhangjiakou, Hebei 075131 (CN)
(72) Inventor: ZHANG, Daoyu, Hebei 075000 (CN); ZHANG, Xiuguo, Hebei 075000 (CN); LIU, Haipeng, Hebei 075000 (CN); YANG, Fei, Beijing 100000 (CN); BAI, Junping, Hebei 075131 (CN); BAI, Zhenyi, Hebei 075131 (CN); HAN, Yanjie, Jinan, Shandong 250000 (CN); WANG, Xingtao, Hebei 075000 (CN); JIA, Xuejiao, Chongqing 400000 (CN); ZHANG, Xiaoxin, Zhangjiakou, Hebei 075131 (CN)
(74) Representative: Papa, Elisabetta
(86) International application number: PCT/CN2015/084917
(87) International publication number: WO 2016/062139

(56) References cited:
- WO-A1-2009/116961
- WO-A1-2013/000127
- CN-A- 102 705 164
- CN-A- 103 967 700
- CN-A- 104 295 440
- CN-U- 202 273 805
- CN-U- 203 770 017
- CN-U- 203 770 018
- CN-U- 204 113 538
- GB-A- 162 999
- US-A- 5 910 688
- US-A1- 2006 251 516

## Description

### TECHNICAL FIELD

The present invention relates to the technical field of wind power generating equipment, in particular to a single-frame impeller of a wind turbine generator set.

### BACKGROUND

A wind turbine generator set utilizes natural wind energy to drive blades and a generator main shaft to rotate so as to drive a motor rotor to rotate and to generate electric power, thereby being environmental friendly and widely used.

At present, a majority of wind turbine generator sets are in a three-blade drive form with a main shaft horizontally arranged. A rated output power of a fan in this structure is increased usually by increasing length of each blade, i.e., by increasing a wind-swept area of each blade. In this way, an overall size and a height of the fan are increased with the increasing of the power of the fan. In addition, a relatively high fan body and relatively long blades increase a vibration degree of the whole fan and possibility of blade fracture, resulting in reduction of wind resistance and great increasing of design requirements for the structure, strength and materials of the whole fan. Particularly, the costs of production, operation and daily maintenance are increased by the complicated structure for asynchronous adjusting the angle of blades which renders the fan more sensitive to the wind velocity and hence a smaller available range of wind velocity (when the wind speed is greater than 25 m/s, to avoid the danger), thereby causing the huge waste of wind power resources, increasing cost of the electric energy per unit kilowatt. As such, there commonly exist such problems such as large investment on wind power equipment, long period of cost recovery and less annual utilization hours. On the other hand, the civil application of fan is restricted by cost and structure of thereof, thus the angle of the blades is non-adjustable, and an overspeed "galloping" failure of a wind wheel is common. In addition, restricted by materials and structure of the blades of the fan, the probability of bulging, fracturing and breaking of the blades struck by lightning during operation is relatively high.

Various wind turbines are disclosed in the prior art. For example, US 2006/0251516A discloses a wind turbine including an open hub, foldable blades attached to the rim of the hub, and a mechanism for tilting the turbine. GB162999A discloses wind-mills, which consists a hollow open ended truncated cone having a wind actuated wheel arranged within its smaller end find being adapted to be 3 disposed with its larger end facing the wind.

In addition, a horizontal-axis wind turbine with door-shaped blades and a retractable wind wheel disclosed in a Chinese patent number ZL 201420077847.5 and a horizontal-axis wind turbine with paddle-shaped blades and a drum-type retractable wind wheel disclosed in a Chinese patent number ZL 201420078001.3 partially solve problems of synchronizing the blades, reducing the size of the fan and the like. However, since the wind wheel structure is formed by two to three circular frames and a plurality of supporting rods, the weight of a whole fan head portion is not reduced. Moreover, since an adjusting mechanism of the blades adopt a way of forming a groove on the frame and pulling by virtue of a steel cable, the structure is complicated, and the corrosion resistance, the daily maintenance and the repairing are relatively difficult. Moreover, a frictional loss of the steel cable and the frame groove is relatively large, resulting in unsatisfactory overall operation and unit power generation cost.

### SUMMARY

An objective of the present invention is to provide a single-frame impeller of a wind turbine generator set to overcome defects in the prior art, and increase the utilization rate and power generation efficiency.

According to the present invention, there is provided a generator with a main shaft horizontally arranged, which further includes a wind wheel frame, blades, a supporting base, oblique supporting rods and a blade adjusting device;
the blade adjusting device includes a blade adjusting chamber, a power unit and an adjusting mechanism; the blade adjusting chamber has a horizontal cylinder shape, the rear end of the blade adjusting chamber is fixedly connected to a front portion of the supporting base, and the blade adjusting chamber and the supporting base are assembled at the front end of a main shaft of the generator; the supporting base and the wind wheel frame are connected with each other through the oblique supporting rods, the blade adjusting chamber is disposed at the center of the wind wheel frame, and the oblique supporting rods are uniformly distributed around the supporting base; the power unit and the adjusting mechanism are assembled inside the blade adjusting chamber;
the blades are fixedly installed on blade shafts, the outer side end of each blade shaft is mounted on the wind wheel frame through a bearing bush, the inner side end of each blade shaft extends into a cylindrical side wall of the blade adjusting chamber, the blade shafts match up with the cylindrical side wall of the blade adjusting chamber via a bearing bush and are limited by a shoulder or a chuck, and the blades are uniformly distributed around the blade adjusting chamber; and
the adjusting mechanism of the blade adjusting device is a gear combined-type adjusting mechanism or a connecting-rod-type combined adjusting mechanism; the gear combined-type adjusting mechanism is a multi-gear transmission-type adjusting mechanism and includes a main transmission gear, duplex gears and shaft-end bevel gears; the shaft-end bevel gears are fixed at the end portions of the blade shafts in the blade adjusting chamber; the main transmission gear is mounted at the middle portion of the blade adjusting chamber through a gear shaft, a plurality of duplex gears each composed of a column gear and a bevel gear are assembled around the main transmission gear, the columnar gear portion of each duplex gear being engaged with the main transmission gear, and the bevel gear portion of each duplex gear being engaged with the shaft-end bevel gear; and the main transmission gear is connected with a power output mechanism of the power unit; and
the connecting-rod-type combined adjusting mechanism includes a push-pull transmission mechanism, an adjusting frame, rotating arms and connecting rods; the push-pull transmission mechanism consists of a swinging arm, a positioning shaft, a main drive arm and a push-pull rod; a guide rail is arranged at the inner side of the cylindrical side wall of the blade adjusting chamber, and the adjusting frame is assembled onto the guide rail on the side wall of the blade adjusting chamber through a bearing or a roller; the rotating arms are vertically fixed on the end portions of the blade shafts disposed in the blade adjusting chamber, the other end of each rotating arm is hinged with the connecting rod, and the other end of each connecting rod is hinged with the adjusting frame; fixed seats are correspondingly arranged on the inner walls of a front end plate and a rear end plate of the blade adjusting chamber, the positioning shaft vertically penetrates through the middle portion of the adjusting frame, and two ends of the positioning shaft are installed on the fixed seat through a bearing and a bearing seat; one end of the swinging arm is vertically fixed at the middle portion of the positioning shaft, the other end of the swinging arm is hinged with the main drive arm, and the main drive arm is connected to the output mechanism of the power unit of the blade adjusting device; and two ends of the push-pull rod are respectively hinged onto the middle portion of the swinging arm and the adjusting frame.

A further preferred solution of the blade adjusting mechanism is as follows:
a spoke-type supporting rod is fixedly connected between the wind wheel frame and the blade adjusting chamber.

Further, the blades are improved as follows: the blades have a hollow structure, the cross section of each blade being in an arc shape, and a supporting ribbed plate being arranged inside each blade;, and each blade having a longitudinal spiral curved surface.

Further, a conical guide cover is assembled at the front end of the blade adjusting chamber.

Further, the power unit of the blade adjusting device adopts an electric motor.

The present invention adopts a frame circular wind wheel with a plurality of blades capable of rotating around a shaft being assembled therein. The frame is made of metal so as to avoid direct lightning stroke on the blades. By changing the number and shape of blades, the connection way of the blades are changed so that both end of the blades are subjected to force, thus improving the connection strength of the blades. By increasing the adjustable angle of the blades, applications in both a low wind speed region and a high wind speed region can be satisfied, the wind energy utilization efficiency of the fan can be increased, and the output power of the whole fan is increased, thereby reducing the cost of unit power of power generation, and the size, the height and the weight of fans. The problems in the prior art such as further increasing the output power of a three-blade horizontal shaft wind turbine generator set, the available wind speed range of the fan is relatively small, the blades are liable to be damaged by the lightning stroke and the like can be solved.

Compared with a telescopic wind-wheel-type fan, according to the technical features of the present invention, the weight and the size of a machine head of the fan and the length of the main shaft are greatly reduced, the blade adjusting device is improved, and the adjusting mechanism is arranged in the adjusting chamber, so that the structure is reasonable, the loss is relatively small, and the failure rate is decreased, thus facilitating daily maintenance.

The present invention will be further described below with reference to drawings and embodiments.

### BRIEF DESCRIPTION OF DRAWINGS

Fig. 1 is a structural schematic diagram of embodiment 1 of the present invention;
Fig. 2 is a structural schematic diagram of a gear-type blade adjusting mechanism provided in embodiment 1 of the present invention;
Fig. 3 is a schematic diagram of a cross section of a blade of the present invention;
Fig. 4 is a schematic diagram of an appearance of a blade of the present invention;
Fig. 5 is a structural schematic diagram of embodiment 2 of the present invention;
Fig. 6 is a schematic diagram of a connection between a wind wheel frame and a blade adjusting chamber provided in embodiment 2 of the present invention; and
Fig. 7 is a structural schematic diagram of a connecting-rod-type blade adjusting mechanism provided in embodiment 2 of the present invention.

### DETAILED DESCRIPTION

Reference signs in the drawings: 1- wind wheel frame, 2-blade, 3-guide cover, 4-oblique supporting rod, 5-blade adjusting chamber, 6-supporting base, 7-generator, 8-pole tower, 9-blade shaft, 10-shaft-end bevel gear, 11-duplex gear, 12-main transmission gear, 13-spoke-type supporting rod, 14-fixed seat, 15-slide block, 16-swinging arm, 17-main drive arm, 18-push-pull rod, 19-adjusting frame, 20-rotating arm, 21-connecting rod, 22-power unit.

### Embodiment 1

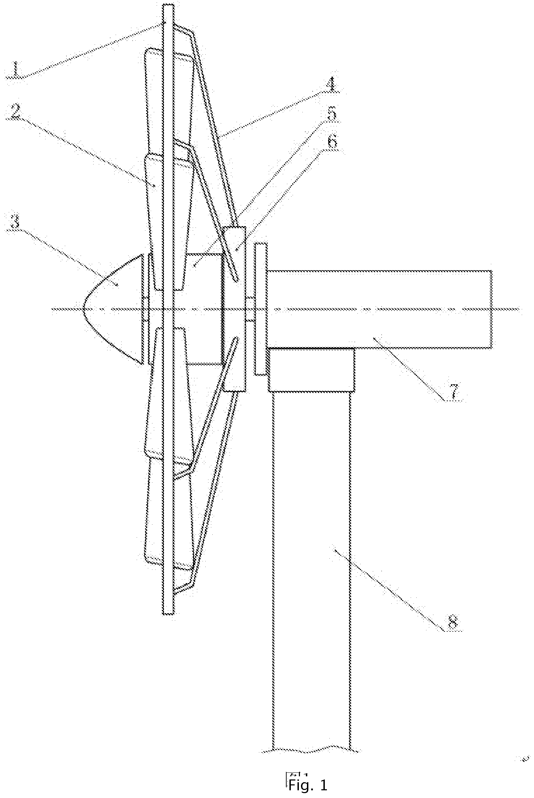

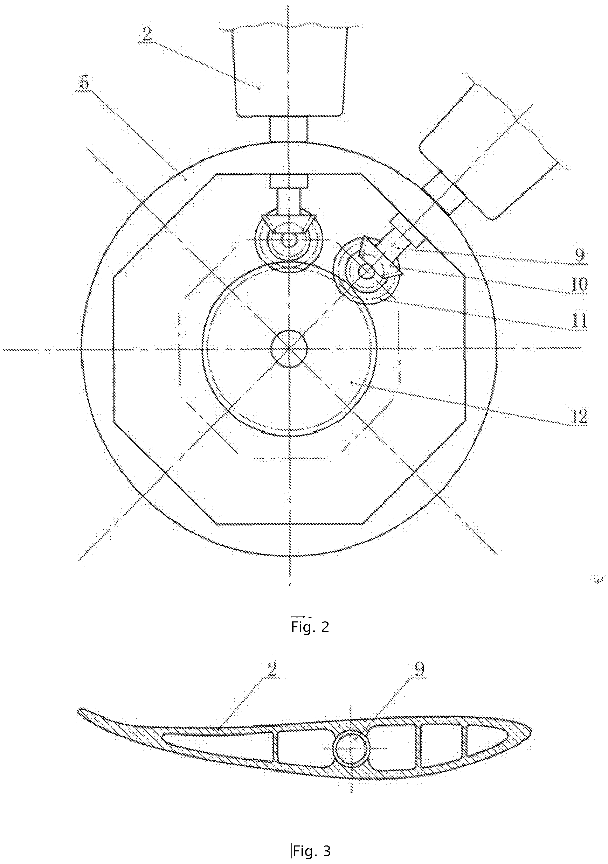

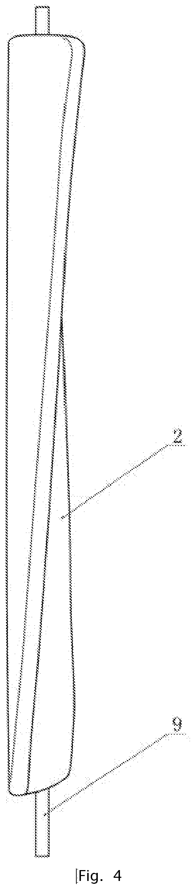

As shown in Fig. 1 to Fig. 4, a technical solution of the present invention includes a generator 7 with a main shaft horizontally arranged, a wind wheel frame 1, blades 2, a supporting base 6, oblique supporting rods 4 and a blade adjusting device. The generator 7 is assembled on the top of a pole tower 8.

The blade adjusting device includes a blade adjusting chamber 5, a power unit and an adjusting mechanism. The blade adjusting chamber 5 has a shape of horizontal cylinder. The rear end of the blade adjusting chamber 5 is fixedly connected to a front portion of the supporting base 6. The blade adjusting chamber 5 is integrated with the supporting base 6 and both are assembled at the front end of a main shaft of the generator and rotate along with the main shaft. The supporting base 6 and the wind wheel frame 1 are connected through the oblique supporting rods 4, so that the blade adjusting chamber 5 is disposed at the center of the wind wheel frame 1, and the supporting base 6 is disposed behind a plane of the wind wheel frame. The oblique supporting rods 4 are uniformly distributed around the supporting base 6. The power unit and the adjusting mechanism are assembled inside the blade adjusting chamber 5. A front end plate of the blade adjusting chamber 5 is provided with a conical guide cover 3. The wind wheel frame 1 is made of metal and thus the frame body essentially forms an annular lightning arrester, so that when in thunderstorm days, lightning can be prevented from directly striking the middle of blades which may cause fracturing, bulging and breaking damage of the blades, thereby greatly decreasing the failure rate.

The blades 2 are fixedly installed on blade shafts 9. Each blade 2 has a hollow structure. The cross section of each blade 2 is in an arc shape, and a supporting ribbed plate is arranged inside each blade 2. Each blade 2 has a spiral curved surface twisted along a longitudinal direction (axial direction of each blade). The outer side end of each blade shaft 9 is assembled onto the wind wheel frame 1 through a bearing bush. The inner side end of each blade shaft 9 extends into the cylindrical side wall of the blade adjusting chamber 5, matches with the cylindrical side wall of the blade adjusting chamber 5 through the bearing bush and is limited by a shoulder or a chuck to prevent an axial play of the blades. The blades 2 are uniformly distributed around the blade adjusting chamber 5.

The adjusting mechanism of the blade adjusting device is a gear combined-type adjusting mechanism or a connecting-rod-type combined adjusting mechanism. The present embodiment adopts the gear combined-type adjusting mechanism, and the power unit for adjusting and controlling an angle of each blade 2 adopts an electric motor. The gear combined-type adjusting mechanism includes a main transmission gear 12, duplex gears 11 and shaft-end bevel gears 10. The shaft-end bevel gears 10 are fixed at the ends of the blade shafts 9 disposed inside the blade adjusting chamber 5. The main transmission gear 12 is assembled to the middle portion of the blade adjusting chamber 5 through a gear shaft. A plurality of duplex gears 11 are assembled around the main transmission gear 12, and each duplex gear 11 is formed by a columnar gear and a bevel gear. The columnar gear portion of each duplex gear 11 is engaged with the main transmission gear 12, and the bevel gear portion of each duplex gear 11 is engaged with the shaft-end bevel gear 10. A gear shaft of the main transmission gear 12 is connected with a power output shaft of the electric motor through a reducer. The power of the electric motor is output through the main transmission gear 12 to drive each duplex gear 11 and each shaft-end bevel gear 10 to rotate, so as to adjust and control the rotation of the blades 2 and to change a windward angle thereof. When the wind is relatively heavy, the windward angle of the blades 2 can be minimized to reduce windage resistance, thereby guaranteeing a full-load operation of the fan.

The angle of the blades 2 of a middle-sized fan can be controlled by a plurality of electric motors according to the size and the weight of a fan, and the output shaft of each electric motor is connected and matches with the main transmission gear 12 by changing a transmission ratio via each gear and outputs power.

### Embodiment 2

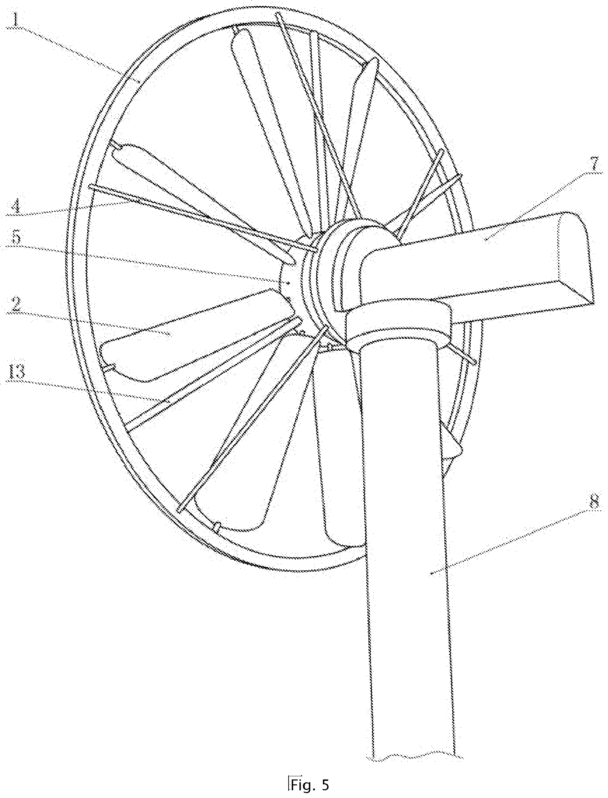

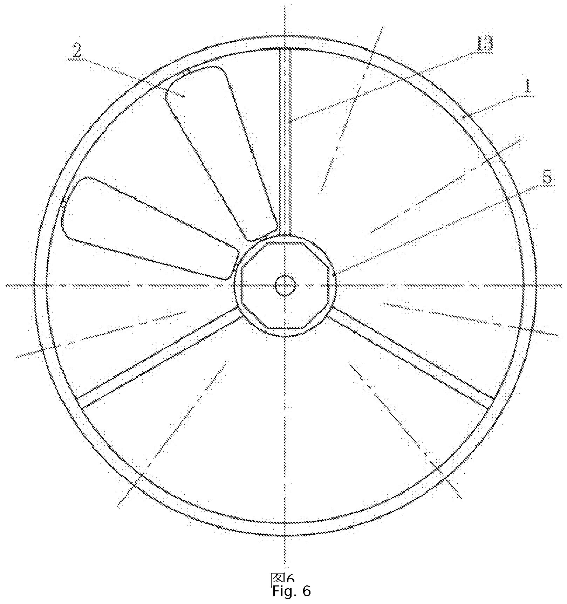

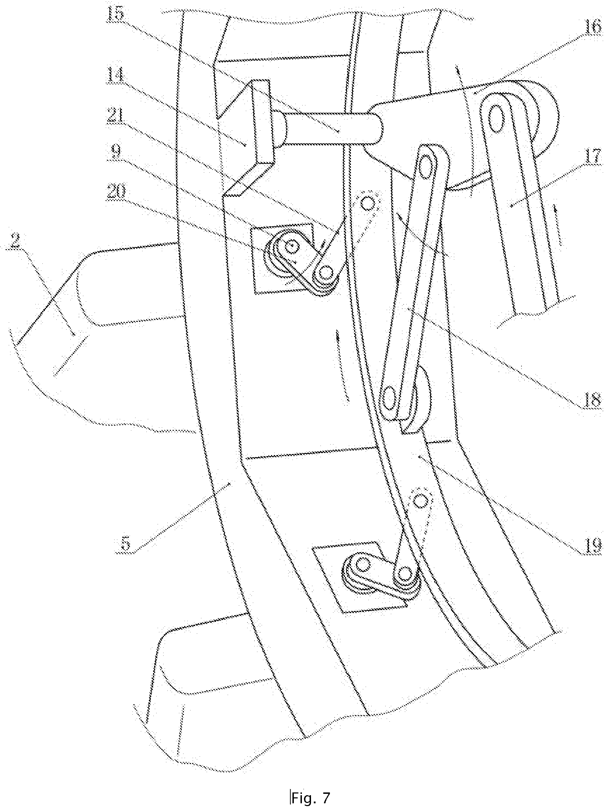

The present embodiment takes a large-sized wind turbine generator set with relatively high output power as an example. As shown in Fig. 5 to Fig. 7, the differences between the present embodiment and embodiment 1 are three spoke-type supporting rods 13 fixedly connected between the blade adjusting chamber 5 and the wind wheel frame 1 for a fan with a relatively big size and weight, . The spoke-type supporting rods 13 are uniformly distributed in a staggered shape like a Chinese character " 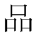 ", thereby improving the strength and the wind resistance of the wind wheel. The adjusting mechanism of the blade adjusting device adopts the connecting-rod-type combined adjusting mechanism, which includes a push-pull transmission mechanism, an adjusting frame 19, rotating arms 20 and connecting rods 21. The push-pull transmission mechanism consists of a swinging arm 16, a positioning shaft 15, a main drive arm 17 and a push-pull rod 18. A circle of annular guide rail is arranged at the inner side of the cylindrical side wall of the blade adjusting chamber 5. The adjusting frame 19 is assembled onto the guide rail on the side wall of the blade adjusting chamber 5 through a roller or a bearing and can rotate in the blade adjusting chamber along the guide rail. The rotating arms 20 are vertically fixed at the ends of the blade shafts 9 disposed in the blade adjusting chamber, and the other ends of the rotating arms 20 are hinged with the connecting rods 21 (may also be connected by adopting a universal joint structure). The other ends of the connecting rods 21 are hinged with the adjusting frame 19. Fixed seats 14 are correspondingly and respectively arranged on the inner walls of a front end plate and a rear end plate of the blade adjusting chamber 5. The positioning shaft 15 vertically penetrates through the middle portion of the adjusting frame 19, and two ends of the positioning shaft 15 are installed on the fixed seats 14 through a bearing and a bearing seat. One end of the swinging arm 16 is vertically fixed at the middle portion of the positioning shaft 15 to form a T-shaped structure, and the other end of the swinging arm 16 is hinged with the main drive arm 17 which is connected to the power unit 22 of the blade adjusting device through a hydraulic device, i.e. the main drive arm 17 is connected to a hydraulic cylinder piston rod of the hydraulic device, and the electric motors (power unit) are connected through an oil pump to a hydraulic cylinder to control its operation. Two ends of the push-pull rod 18 are respectively hinged onto the middle portion of the swinging arm 16 and the adjusting frame 19.

The electric motors drive the main drive arm 17 to move via the hydraulic device so as to push (or pull) the swinging arm 16 to swing around the positioning shaft 15. The swinging arm 16 drives the adjusting frame 19 to rotate along the guide rail through the push-pull rod 18, and the adjusting frame 19 drags the connecting rods 21 to drive the rotating arms 20 to swing so as to drive each blade shaft 9 to rotate, thereby changing the windward angle of the blades.

According to the power of the fan and the size and the weight of the blade mechanism, a plurality of groups of push-pull transmission mechanisms can be arranged and are respectively driven by a plurality of electric motors to simultaneously rotate so as to drive the blades to rotate.

Rest structures of the present embodiment are identical to that of the embodiment 1.

## Claims

1. A single-frame impeller of a wind turbine generator set, comprising:
a blade adjusting chamber (5);
a wind wheel frame (1) surrounding the blade adjusting chamber (5);
a blade unit (2, 9) with an outer side end thereof being rotatably supported on the wind wheel frame (1) and an inner side end extending into the blade adjusting chamber (5), the blade unit (2, 9) comprising a blade body (2) and a blade shaft (9) extending along the entire length of the blade body (2) to two ends, the outer side end of the blade shaft (9) being rotatably supported on the wind wheel frame and the inner side end thereof extending into the blade adjusting chamber (5);
a rotating element and a transmission element provided in the blade adjusting chamber (5), the transmission element being capable of transmitting the power generated by the rotation of the rotating element to the inner side end of the blade unit (2, 9) to control the windward angle of the blade unit (2, 9),
and further comprising:
a supporting base (6) provided at the leeward side of the blade adjusting chamber (5); and **characterized in that**, the single-frame impeller further comprises
an oblique supporting rod (4), the oblique supporting rod (4) with one end thereof is fixedly connected to the supporting base (6) and the other end is fixedly connected to the wind wheel frame (1).

2. The single-frame impeller of a wind turbine generator set according to claim 1, wherein
the rotating element is a driving gear;
the inner side end of the blade unit is provided with a driven gear; and
the transmission element is a transmission gear engaged with the driving gear and the driven gear respectively.

3. The single-frame impeller of a wind turbine generator set according to claim 2, wherein
the driving gear is a columnar gear (12);
the driven gear is a shaft-end bevel gear (10); and
the transmission gear is a duplex gear (11) having a columnar gear portion corresponding to the columnar gear (12) and a bevel gear portion corresponding to the shaft-end bevel gear (10).

4. The single-frame impeller of a wind turbine generator set according to claim 1, wherein
the rotating element is an annular frame (19) capable of performing orbital motion;
the inner side end of the blade unit is provided with a rotating arm (20); and
the transmission element is a connecting rod (21), one end of the connecting rod (21) being hinged to the annular frame (19) and the other end being hinged to the rotating arm (20).

5. The single-frame impeller of a wind turbine generator set according to claim 4, wherein
the cylindrical inner wall of the blade adjusting chamber (5) is provided with an annular guide rail; and
the annular frame (19) is provided to be capable of rotating about the annular guide rail.

6. The single-frame impeller of a wind turbine generator set according to claim 5, further comprising a drive mechanism for driving the annular frame to perform orbital motion, the drive mechanism comprising:
a main drive arm (17) with a first end thereof being connected to a power source;
a push-pull rod (18) with a first end thereof being hinged to the annular frame (19); and
a swinging arm (16) rotatably supported on the inner wall of the blade adjusting chamber (5) via a positioning shaft (15), the swinging arm (16) being hinged to a second end of the main drive arm (17) and a second end of the push-pull rod (18).

7. The single-frame impeller of a wind turbine generator set according to claim 6, wherein the swinging arm (16), the push-pull rod (18) and the annular frame (19) are arranged in a coplanar manner.

8. The single-frame impeller of a wind turbine generator set according to any one of claims 1 to 7, further comprising:
a plurality of spoke-type supporting rods (13) with one end thereof being fixedly connected to the wind wheel frame (1) and the other end being fixedly connected to the outer wall of the blade adjusting chamber (5), the spoke-type supporting rods (13) being uniformly distributed around the blade adjusting chamber (5).

9. The single-frame impeller of a wind turbine generator set according to claim 1, wherein
the blade body (2) is of a hollow structure with an arc cross section, and the interior of the blade body (2) is provided with reinforcing ribs.

10. The single-frame impeller of a wind turbine generator set according to claim 9, wherein
the blade body (2) has a spiral curved surface lengthwise.

11. The single-frame impeller of a wind turbine generator set according to any one of claims 1 to 7, further comprising:
a conical guide cover (3) provided at the windward side of the blade adjusting chamber (5).

## Patentansprüche

1. Einzelrahmenlaufrad einer Windkraftanlagen-Generatorgruppe, umfassend:
- eine Schaufeleinstellkammer (5),
- einen Windradrahmen (1), der die Schaufeleinstellkammer (5) umgibt,
- eine Schaufeleinheit (2, 9) mit einem äußeren Seitenende, das drehbar auf dem Windradrahmen (1) gelagert ist, und mit einem inneren Seitenende, das sich in die Schaufeleinstellkammer (5) erstreckt, wobei die Schaufeleinheit (2, 9) einen Schaufelkörper (2) und eine sich über die gesamte Länge des Schaufelkörpers (2) bis zu zwei Enden erstreckende Schaufelwelle (9) umfasst, wobei das äußere Seitenende der Schaufelwelle (9) drehbar auf dem Windradrahmen gelagert ist und das innere Seitenende davon sich in die Schaufeleinstellkammer (5) erstreckt,
- ein Drehelement und ein Getriebeelement, die in der Schaufeleinstellkammer (5) vorgesehen sind, wobei das Getriebeelement in der Lage ist, die durch die Drehung des Drehelements erzeugte Leistung auf das innere Seitenende der Schaufeleinheit (2, 9) zu übertragen, um den Luvwinkel der Schaufeleinheit (2, 9) zu steuern, und ferner umfassend:
- eine Stützbasis (6), die an der Leeseite der Schaufeleinstellkammer (5) vorgesehen ist,
und **dadurch gekennzeichnet, dass** das Einzelrahmenlaufrad ferner umfasst:
- eine Schrägstützstange (4), deren ein Ende fest mit der Stützbasis (6) verbunden ist und deren anderes Ende fest mit dem Windradrahmen (1) verbunden ist.

2. Einzelrahmenlaufrad einer Windkraftanlagen-Generatorgruppe nach Anspruch 1, wobei:
- das Drehelement ein Antriebszahnrad ist,
- das innere Seitenende der Schaufeleinheit mit einem angetriebenen Zahnrad versehen ist, und
- das Getriebeelement ein Getriebezahnrad ist, das mit dem Antriebszahnrad bzw. dem angetriebenen Zahnrad in Eingriff steht.

3. Einzelrahmenlaufrad einer Windkraftanlagen-Generatorgruppe nach Anspruch 2, wobei:
- das Antriebszahnrad ein Säulenzahnrad (12) ist,
- das angetriebene Zahnrad ein Wellenendkegelzahnrad (10) ist, und
- das Getriebezahnrad ein Duplexzahnrad (11) mit einem dem Säulenzahnrad (12) entsprechenden Säulenzahnradabschnitt und mit einem dem Wellenendkegelzahnrad (10) entsprechenden Kegelzahnradabschnitt ist.

4. Einzelrahmenlaufrad einer Windkraftanlagen-Generatorgruppe nach Anspruch 1, wobei:
- das Drehelement ein Ringrahmen (19) ist, der eine Orbitalbewegung ausführen kann,
- das innere Seitenende der Schaufeleinheit mit einem Dreharm (20) versehen ist, und
- das Getriebeelement eine Pleuelstange (21) ist, deren eines Ende an dem Ringrahmen (19) angelenkt ist und deren anderes Ende an dem Dreharm (20) angelenkt ist.

5. Einzelrahmenlaufrad einer Windkraftanlagen-Generatorgruppe nach Anspruch 4, wobei:
- die zylindrische Innenwand der Schaufeleinstellkammer (5) mit einer Ringführungsschiene versehen ist, und
- der Ringrahmen (19) so vorgesehen ist, dass er sich um die Ringführungsschiene drehen kann.

6. Einzelrahmenlaufrad einer Windkraftanlagen-Generatorgruppe nach Anspruch 5, ferner umfassend einen Antriebsmechanismus zum Antreiben des Ringrahmens zum Ausführen einer Orbitalbewegung, wobei der Antriebsmechanismus umfasst:
- einen Hauptantriebsarm (17), dessen erstes Ende mit einer Leistungsquelle verbunden ist,
- eine Schub-Zugstange (18), deren erstes Ende an dem Ringrahmen (19) angelenkt ist, und
- einen Schwenkarm (16), der drehbar an der Innenwand der Schaufeleinstellkammer (5) über eine Positionierwelle (15) gelagert ist, wobei der Schwenkarm (16) an einem zweiten Ende des Hauptantriebsarms (17) bzw. an einem zweiten Ende der Schub-Zugstange (18) angelenkt ist.

7. Einzelrahmenlaufrad einer Windkraftanlagen-Generatorgruppe nach Anspruch 6, wobei der Schwenkarm (16), die Schub-Zugstange (18) und der Ringrahmen (19) koplanar angeordnet sind.

8. Einzelrahmenlaufrad einer Windkraftanlagen-Generatorgruppe nach einem der Ansprüche 1 bis 7, ferner umfassend:
- mehrere speichenartige Stützstangen (13), deren ein Ende fest mit dem Windradrahmen (1) verbunden ist und deren anderes Ende fest mit der Außenwand der Schaufeleinstellkammer (5) verbunden ist, wobei die speichenartigen Stützstangen (13) gleichmäßig um die Schaufeleinstellkammer (5) verteilt sind.

9. Einzelrahmenlaufrad einer Windkraftanlagen-Generatorgruppe nach Anspruch 1, wobei der Schaufelkörper (2) als Hohlstruktur mit einem Bogenquerschnitt ausgebildet ist und das Innere des Schaufelkörpers (2) mit Verstärkungsrippen versehen ist.

10. Einzelrahmenlaufrad einer Windkraftanlagen-Generatorgruppe nach Anspruch 9, wobei der Schaufelkörper (2) eine spiralförmig gekrümmte Oberfläche in Längsrichtung aufweist.

11. Einzelrahmenlaufrad einer Windkraftanlagen-Generatorgruppe nach einem der Ansprüche 1 bis 7, ferner umfassend:
- eine konische Führungsabdeckung (3), die an der Luvseite der Schaufeleinstellkammer (5) vorgesehen ist.

## Revendications

1. Impelleur à châssis unique d'un groupe éolienne-générateur, comprenant :
- une chambre de réglage de pale (5),
- un châssis de roue éolienne (1) entourant la chambre de réglage de pale (5),
- une unité de pale (2, 9), dont une extrémité latérale extérieure est supportée de manière rotative sur le châssis de roue éolienne (1) et dont une extrémité latérale intérieure s'étend dans la chambre de réglage de pale (5), l'unité de pale (2, 9) comprenant un corps de pale (2) et un arbre de pale (9) s'étendant sur toute la longueur du corps de pale (2) jusqu'à deux extrémités, l'extrémité latérale extérieure de l'arbre de pale (9) étant supportée de manière rotative sur le châssis de roue éolienne et l'extrémité latérale intérieure de celui-ci s'étendant dans la chambre de réglage de pale (5),
- un élément rotatif et un élément de transmission prévus dans la chambre de réglage de pale (5), l'élément de transmission étant capable de transmettre la puissance générée par la rotation de l'élément rotatif à l'extrémité latérale intérieure de l'unité de pale (2, 9) pour contrôler l'angle au vent de l'unité de pale (2, 9),
et comprenant en outre :
- une base de support (6) prévue du côté sous le vent de la chambre de réglage de pale (5),
et **caractérisé en ce que** l'impelleur à châssis unique comprend en outre :
- une tige de support oblique (4), dont une extrémité est reliée de manière fixe à la base de support (6) et dont l'autre extrémité est reliée de manière fixe au châssis de roue éolienne (1).

2. Impelleur à châssis unique d'un groupe éolienne-générateur selon la revendication 1, dans lequel :
- l'élément rotatif est un engrenage menant,
- l'extrémité latérale interne de l'unité de pale est pourvue d'un engrenage mené, et
- l'élément de transmission est un engrenage de transmission engagé respectivement avec l'engrenage menant et l'engrenage mené.

3. Impelleur à châssis unique d'un groupe éolienne-générateur selon la revendication 2, dans lequel :
- l'engrenage menant est un engrenage colonnaire (12),
- l'engrenage mené est un engrenage conique d'extrémité d'arbre (10), et
- l'engrenage de transmission est un engrenage double (11) ayant une partie d'engrenage colonnaire correspondant à l'engrenage colonnaire (12) et une partie d'engrenage conique correspondant à l'engrenage conique d'extrémité d'arbre (10).

4. Impelleur à châssis unique d'un groupe éolienne-générateur selon la revendication 1, dans lequel :
- l'élément rotatif est un châssis annulaire (19) capable d'effectuer un mouvement orbital,
- l'extrémité latérale intérieure de l'unité de pale est pourvue d'un bras rotatif (20); et
- l'élément de transmission est une bielle de connexion (21), dont une extrémité est articulée sur le châssis annulaire (19) et dont l'autre extrémité est articulée sur le bras rotatif (20).

5. Impelleur à châssis unique d'un groupe éolienne-générateur selon la revendication 4, dans lequel :
- la paroi intérieure cylindrique de la chambre de réglage de pale (5) est pourvue d'un rail de guidage annulaire, et
- le châssis annulaire (19) est prévu pour pouvoir tourner autour du rail de guidage annulaire.

6. Impelleur à châssis unique d'un groupe éolienne-générateur selon la revendication 5, comprenant en outre un mécanisme d'entraînement pour entraîner le châssis annulaire pour effectuer un mouvement orbital, le mécanisme d'entraînement comprenant :
- un bras d'entraînement principal (17), dont une première extrémité est reliée à une source d'alimentation,
- une tige de poussée-traction (18), dont une première extrémité est articulée sur le châssis annulaire (19), et
- un bras oscillant (16) supporté de manière rotative sur la paroi intérieure de la chambre de réglage de pale (5) via un arbre de positionnement (15), le bras oscillant (16) étant articulé respectivement à une seconde extrémité du bras d'entraînement principal (17) et à une seconde extrémité de la tige de poussée-traction (18).

7. Impelleur à châssis unique d'un groupe éolienne-générateur selon la revendication 6, dans lequel le bras oscillant (16), la tige de poussée-traction (18) et le châssis annulaire (19) sont disposés de manière coplanaire.

8. Impelleur à châssis unique d'un groupe éolienne-générateur selon l'une quelconque des revendications 1 à 7, comprenant en outre :
- une pluralité de tiges de support du type rayon (13), dont une extrémité est reliée de manière fixe au châssis de roue éolienne (1) et dont l'autre extrémité est reliée de manière fixe à la paroi extérieure de la chambre de réglage de pale (5), les tiges de support du type rayon (13) étant uniformément réparties autour de la chambre de réglage de pale (5).

9. Impelleur à châssis unique d'un groupe éolienne-générateur selon la revendication 1, dans lequel le corps de pale (2) est d'une structure creuse avec une section transversale d'arc, et l'intérieur du corps de pale (2) est pourvu de nervures de renfort.

10. Impelleur à châssis unique d'un groupe éolienne-générateur selon la revendication 9, dans lequel le corps de pale (2) a une surface courbe en spirale dans le sens longitudinal.

11. Impelleur à châssis unique d'un groupe éolienne-générateur selon l'une quelconque des revendications 1 à 7, comprenant en outre :
- un couvercle de guidage conique (3) prévu sur le côté au vent de la chambre de réglage de pale (5).
